# EUROPEAN PATENT SPECIFICATION

(11) **EP 3 415 059 B1**
(45) Date of publication and mention of the grant of the patent: **10.03.2021**
(21) Application number: 17194269.1
(22) Date of filing: 30.09.2017
(51) Int. Cl.: A47J 37/06

(54) **WAFFLE MAKER CAPABLE OF DISPLAYING WAFFLE CRISPNESS AND CONTROL SYSTEM THEREOF**
WAFFELMASCHINE MIT ANZEIGE DER WAFFELKNUSPRIGKEIT UND STEUERUNGSSYSTEM DAFÜR
PRÉPARATEUR DE GAUFRES POUVANT AFFICHER LA CROUSTILLANCE DE LA GAUFRE ET SON SYSTÈME DE COMMANDE

(30) Priority: 13.06.2017 CN 201720685951 U
(43) Date of publication of application: 19.12.2018
(73) Proprietor: Ningbo Kaibo Group Co., Ltd., 315324 Ningbo Zhejiang (CN)
(72) Inventor: YAN, Jiebo, Ningbo, Zhejiang 315324 (CN)
(74) Representative: Proi World Intellectual Property GmbH

(56) References cited:
- US-A- 6 044 755
- US-A1- 2006 201 333
- US-A1- 2016 198 898
- US-B1- 6 427 581

## Description

### TECHNICAL FIELD

The present invention relates to the technical field of cooking electric appliances and, in particular, to a waffle maker capable of displaying waffle crispness and a control system thereof.

### BACKGROUD

Electric waffle makers on the market, such as the baking machine and the heating control method thereof as disclosed in the Chinese patent application CN104274087A, are generally equipped with a temperature sensor for detecting the temperature of a baking plate; the temperature sensor transmits a temperature signal to a circuit board, and the circuit board controls the turning-on/turning-off of a heating switch so as to control the temperature of the baking plate; when the temperature of the baking plate decreases to a temperature threshold, the heating switch is switched on, and, when the temperature of the baking plate increases to another temperature threshold, the heating switch is switched off, such that the temperature of the baking plate fluctuates in a certain range. The circuit board also controls baking time.

Electric waffle makers on the market can set baking time in advance, but cannot set waffle crispness directly. The set baking time is fixed and this consequently causes the following problem: since the waffle batter formulated each time is probably different, waffles of different ingredients are different in crispness when baked for the same time. It is not easy to obtain the desired crispness. Although so-called visible waffle makers are available on the market, with which the baking condition of the waffles being baked can be observed without opening the lid of the waffle makers; however, to obtain waffles with desired crispness, it is necessary to keep a close watch on the waffles; and even so it is still difficult to control the baking degree of the waffles and thus difficult to obtain uniform crispness US 2006/201333 A1 and US 6 427 581 B1 show waffle makers wherein crispness can be varied by applying different power/time combinations.

### SUMMARY

In view of the problems of the waffle makers currently on the market, the present invention provides a waffle maker capable of displaying waffle crispness; this waffle maker can directly set crispness instead of baking time and can display waffle crispness. The present invention further provides a control system of the waffle maker capable of displaying waffle crispness.

In order to achieve the above objective, the present invention adopts the following technical solution: A waffle maker capable of displaying waffle crispness comprises an upper lid assembly and a lower lid assembly that can be opened and closed with respect to each other, the upper lid assembly comprising an upper baking plate and an upper lid, the lower lid assembly comprising a lower baking plate and a lower lid, both the upper lid assembly and the lower lid assembly being provided with a heating element; the waffle maker further comprising:
a temperature detection element for detecting the temperature of the baking plate of the waffle maker;
an operation panel for setting and displaying waffle crispness; and
a circuit board for adjusting baking time according to the set waffle crispness and a temperature drop rate of the baking plate, the circuit board being connected with the temperature detection element and the operation panel respectively.

The waffle maker capable of displaying waffle crispness in the present invention can set the required crispness in advance and display waffle crispness, instead of setting any baking time in advance; the baking time corresponding to the required crispness is not fixed; when the baking plate reaches a preheating temperature, waffle batter is poured in and the temperature of the baking plate lowers gradually; when the temperature of the baking plate lowers to the lowest temperature threshold, the heating element works; when the temperature of the baking plate rises to the highest temperature threshold, the heating element stops working; the circuit board calculates the temperature drop rate of the baking plate from the first set temperature to the second set temperature and converts the temperature drop rate into the water content in the waffle batter, thereby intelligently adjusting baking time. The program in the circuit board includes corresponding curves of the temperature drop rate and crispness obtained through multiple experiments. The circuit board may calculate the temperature drop rate only one time or multiple times. The time needed when the temperature of the baking plate lowers by certain value and the drop rate are in one-to-one correspondence; the time needed when the temperature of the baking plate lowers by certain value may be detected directly, or the time may be converted into a drop rate. An indicator light displaying baking progress also may be arranged on the waffle maker.

Preferably, the operation panel includes a crispness button for setting waffle crispness and a crispness indicator light for indicating waffle crispness. Through the setting of the crispness button, the required crispness may be set; through the setting of the crispness indicator light, the currently set crispness may be indicated.

Preferably, one crispness button is provided, a plurality of crispness indicator lights are provided, and/or a crispness indicator mark is arranged at the crispness indicator light. By switching between or rotary-selecting different levels of crispness through one crispness button, the number of buttons may be reduced. The crispness indicator mark may be a simple membrane, also may be an indicator light indicating baking progress.

Preferably, the temperature detection element is a thermistor temperature sensor and the thermistor temperature sensor contacts the lower baking plate. The thermistor temperature sensor has advantages of good sensitivity, high precision, low cost, toughness and durability, etc.

Preferably, the waffle maker further includes a buzzer and/or a preheating indicator light for indicating the completion of preheating, so as to prompt a user to operate after the completion of preheating.

A control system of a waffle maker capable of displaying waffle crispness includes:
a heating module for heating a baking plate;
a temperature detection module for detecting the temperature of the baking plate;
an operation and display module for controlling an operation panel to set and display waffle crispness; and
a control module for adjusting baking time according to the set waffle crispness and a temperature drop rate of the baking plate, the control module being connected with the heating module, the temperature detection module and the operation and display module respectively.

The control system of the waffle maker capable of displaying waffle crispness in the present invention includes the operation and display module for controlling the operation panel to set and display waffle crispness, the operation and display module can directly set waffle crispness and observe current waffle crispness; the control module extra calculates the temperature drop rate of the baking plate and hereby intelligently adjusts baking time; the time of each baking is adjusted according to the data obtained from calculation, thereby guaranteeing that waffles are obtained with the required crispness.

Preferably, the control module calculates the temperature drop rate of the baking plate multiple times so as to adjust the rest baking time multiple times. The temperature change rate calculated only one time probably has an error due to various accidental factors; calculating the temperature change rate multiple times may enable a more accurate result, thereby obtaining waffles more consistent in crispness.

Preferably, the control module calculates the temperature drop rate of the baking plate from a first set temperature to a second set temperature, the first set temperature being one value from 160 degrees centigrade to 180 degrees centigrade and the second set temperature being one value from 120 degrees centigrade to 140 degrees centigrade. Lots of experiments prove that the temperature-drop rate and the water content in waffles have a more accurate correspondence when the first and second set temperatures are in the above range.

Preferably, the first set temperature is set to 170 degrees centigrade and the second set temperature is set to 130 degrees centigrade. Of course, the first and second set temperatures also may be 200 degrees centigrade and 150 degrees centigrade, and other temperatures. An important improvement of the present invention is to calculate the temperature drop rate of the baking plate and intelligently adjust baking time according to the correspondence obtained through experiments between the water content in waffles and the temperature drop rate.

Preferably, the operation and display module includes a crispness button unit and a crispness indicator light unit.

Preferably, the control system further includes a preheating module for controlling a preheating indicator light and/or a preheating buzzer, the preheating module being connected with the control module.

The waffle maker capable of displaying waffle crispness and the control system thereof provided by the present invention can display waffle crispness and directly select the required crispness, and can extra calculate the temperature drop rate of the baking plate and obtain the water content in waffles according to the temperature drop rate, thereby intelligently adjusting baking time and guaranteeing that the baked waffles are consistent in crispness.

### BRIEF DESCRIPTION OF THE DRAWINGS

FIG. 1 is a diagram illustrating the structure of an embodiment of the present invention in a closed state.
FIG. 2 is a diagram illustrating the structure of an embodiment of the present invention in an open state.
FIG. 3 is a diagram illustrating the exploded structure of an embodiment of the present invention.
FIG. 4 is a diagram illustrating a nameplate of an embodiment of the present invention.
FIG. 5 is a block diagram illustrating the structure of a control system of an embodiment of the present invention.
FIG. 6 is a flowchart of the control system of an embodiment of the present invention.
FIG. 7 is another flowchart of the control system of an embodiment of the present invention.

In the figures, 1 represents an upper lid, 2 represents a lower lid, 3 represents an upper baking plate, 4 represents a lower baking plate, 5 represents a thermistor temperature sensor, 6 represents a power source base plate, 7 represents a circuit board, 8 represents an operation panel, 9 represents a nameplate, 91 represents a crispness setting button mark, 92 represents an ON/OFF button mark, 93 represents a preheating completion indicator light mark, 94 represents a crispness indicator light hole, and 95 represents a crispness indicator mark.

### DESCRIPTION OF THE EMBODIMENTS

The technical schemes of the embodiments of the present invention are explained and described below in conjunction with the drawings of the embodiments of the present invention. However, the following embodiments are not all, but just preferred embodiments of the present invention. Based on the embodiments in the implementation, other embodiments obtained by those skilled in the art without creative efforts all should fall within the protective scope of the present invention.

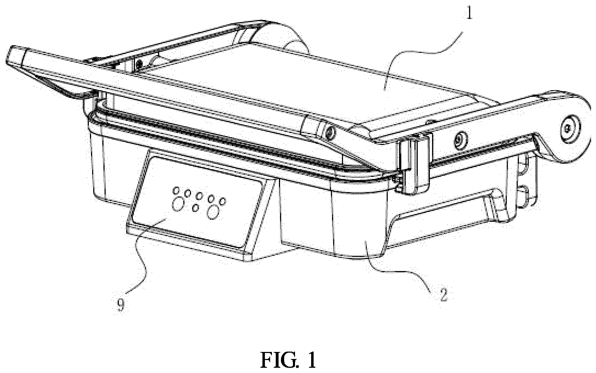

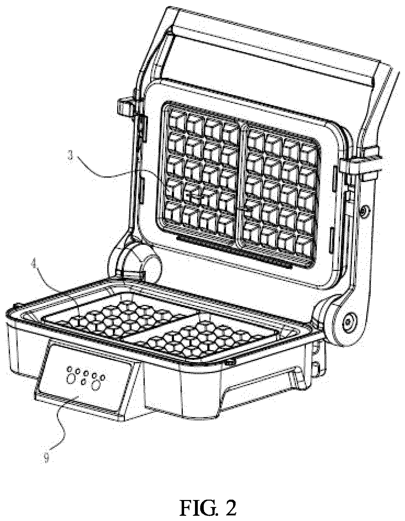

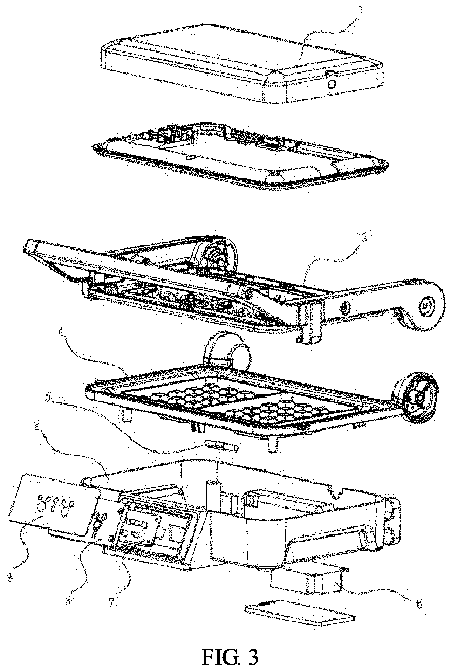

As shown in FIG. 1 to FIG. 3, the waffle maker capable of displaying waffle crispness in the embodiment of the present invention includes an upper lid assembly and a lower lid assembly that can be opened and closed with respect to each other, the upper lid assembly includes an upper baking plate 3 and an upper lid 1, the lower lid assembly includes a lower baking plate 4 and a lower lid 2, both the upper lid assembly and the lower lid assembly are provided with a heating element (not shown in the drawings). The waffle maker further includes: a temperature detection element for detecting the temperature of the baking plate, a heating switch for controlling a heating element, an operation panel for setting waffle crispness, and a circuit board; the circuit board is connected with the temperature detection element, the operation panel and the heating switch respectively, the circuit board controls the on and off of the heating switch according to the detected temperature, and the circuit board controls baking time according to the set crispness and the time needed by the baking plate to lower to a second set-temperature from a first set-temperature. In this embodiment, the first set temperature is 170 degrees centigrade, and the second set temperature is 130 degrees centigrade.

A power source base plate 6 is installed on the lower lid 2. The circuit board 7 is also installed on the lower lid 2, the operation panel 8 is installed on the circuit board7, and a nameplate 9 is attached to the operation panel 8.

The temperature detection element is a thermistor temperature sensor 5; the thermistor temperature sensor 5 is installed on the bottom surface of the lower baking plate 4 and contacts the lower baking plate 4.

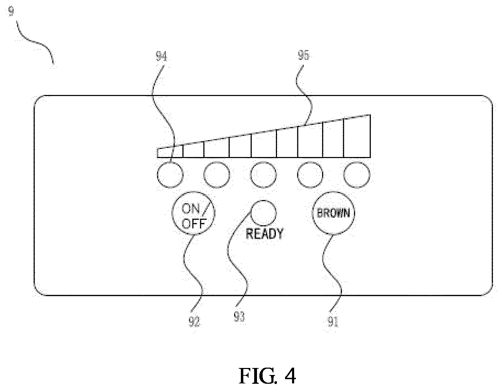

FIG. 4 shows a nameplate of the embodiment of the present invention. A crispness setting button mark 91, an ON/OFF button mark 92, a preheating completion indicator light mark 93, a plurality of crispness indicator light holes 94 and a crispness indicator mark 95 are arranged on the nameplate 9. The crispness indicator mark 95 also may be transparent, and a baking progress indicator light is arranged at the corresponding position of the crispness indicator mark 95.

In other embodiments, a plurality of crispness setting buttons may be arranged on the operation panel 8, and each crispness setting button corresponds to a level of crispness, or, a crispness setting knob may be arranged on the operation panel 8, thereby being capable of selecting the required crispness steplessly. In other embodiments, the waffle maker may be touch controlled.

The waffle maker capable of displaying waffle crispness in the embodiment of the present invention has a working process as follows. After the waffle maker is powered on, the highest-crispness indicator light (corresponding to the rightmost crispness indicator light hole in FIG. 4) keeps turned on; the BROWN crispness setting button is operated to enable the crispness indicator lights to keep turned on from high to low (lights corresponding to the crispness indicator light holes in FIG. 4 keep turned on from right to left in turn); after the required crispness is selected, the ON/OFF button is pressed, then the heating element works, and, at this time, the crispness setting light becomes flickering; when the baking plate reaches the set preheating temperature capable of baking waffles, the READY preheating indicator light turns on, at this time, the upper lid assembly is opened and an appropriate amount of stirred waffle batter is poured into the lower baking plate, then the upper lid assembly is closed to roast the baking plate; the circuit board calculates and adjusts baking time according to a program; when the set waffle crispness is reached, the heating element stops working, the crispness setting light keeps turned on, meanwhile the buzzer works to remind the user to open the upper lid assembly to take out the baked waffles; after the upper lid assembly is closed, the heating element works, and, when the baking plate reaches the set preheating temperature capable of baking waffles, the READY preheating indicator light turns on, then the user may put the stirred waffle batter into the lower baking plate again for a next turn of baking.

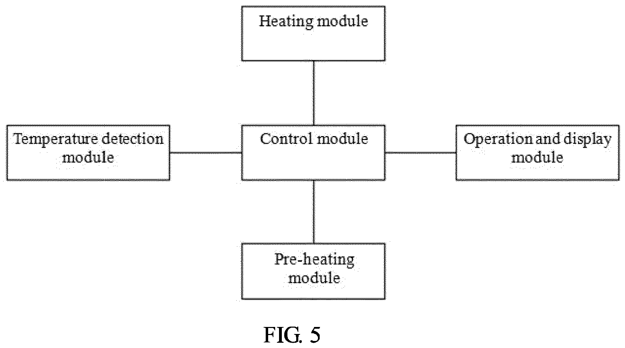

FIG. 5 is a block diagram illustrating the structure of a control system of the embodiment of the present invention. The control system includes a control module, an operation and display module, a heating module, a temperature detection module and a preheating module. The control module is connected with the operation and display module, the heating module, the temperature detection module and the preheating module respectively. The operation and display module includes a crispness button unit and a crispness indicator light unit.

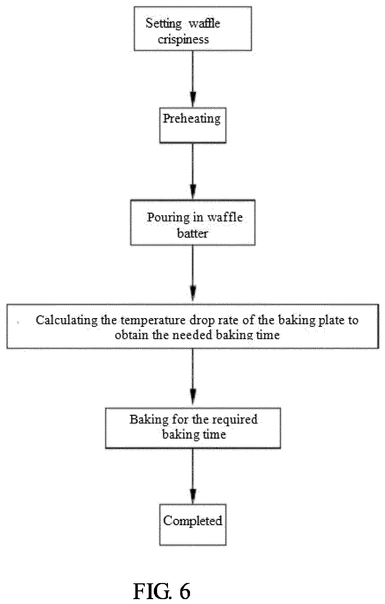

FIG. 6 shows a flowchart of a feasible control method of the waffle maker capable of displaying waffle crispness in the present invention. 1. Setting waffle crispness: this is realized through one or more crispness buttons by the waffle maker. 2. Preheating: after the crispness is set, the waffle maker conducts preheating, herein the preheating is realized by the heating element arranged on the baking plate after the heating switch is switched on, the preheating temperature is higher than a first set temperature, for example, 200 degrees centigrade. 3. Pouring in waffle batter: the preheating completion indicator light and buzzer may be set to indicate the completion of preheating, and, after the completion of preheating, the heating switch breaks and the heating element stops working, and then waffle batter is poured in. 4. Calculating the temperature drop rate of the baking plate to obtain the needed baking time: after the waffle batter is poured in, the temperature of the baking plate lowers, then the time needed by the baking plate to lower to a second set temperature from the first set temperature is calculated (that is, the temperature drop rate is calculated) to obtain the baking time needed to acquire the waffles with the preset crispness, the first set temperature may be 170 degrees centigrade, the second set temperature may be 130 degrees centigrade, and, when the baking plate lowers to 130 degrees centigrade, the heating element works. 5. Baking for the required baking time: supposing 10 seconds is needed when the baking plate lowers to 130 degrees centigrade from 170 degrees centigrade and, in case of 10 seconds, moderate crispness corresponds to 5 minutes of baking, the waffles are baked for 5 minutes. 6. Completed: after the waffles are baked for the required baking time, the baking is completed, and the waffle maker gives indication, for example, the state of the indicator light changes and the buzzer sounds. Of course, the preheating may be conducted before the crispness setting, as long as the baking time is automatically adjusted according to the temperature drop rate of the baking plate; other flows such as heating temperature and heating programs, etc. all can be changed correspondingly.

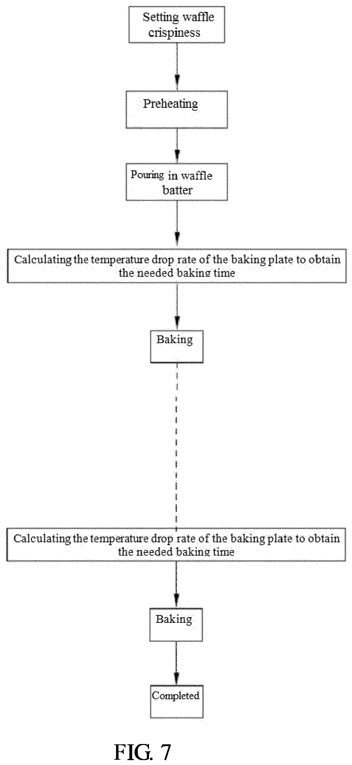

FIG. 7 shows a flowchart of another feasible control method of the waffle maker capable of displaying waffle crispness in the present invention. The difference between what shown in FIG. 7 and what shown in FIG. 6 lies in that the temperature drop rate of the baking plate is calculated only one time in FIG. 6; in FIG. 7, the temperature drop rate of the baking plate is calculated multiple times and the baking time is adjusted multiple times so as to obtain more accurate crispness. According to the control flow in FIG. 6, if waffles of moderate crispness need to be baked, supposing 10 seconds is needed when the baking plate first lowers to 130 degrees centigrade from 170 degrees centigrade and, in case of 10 seconds, moderate crispness corresponds to 5 minutes of baking, then the waffles are baked for 5 minutes. According to the control flow in FIG. 7, if waffles of moderate crispness need to be baked, supposing 10 seconds is needed when the baking plate first lowers to 130 degrees centigrade from 170 degrees centigrade, after the waffles are baked for 1 minute, it is calculated that 8 seconds is needed when the baking plate lowers to 130 degrees centigrade again from 170 degrees centigrade, and, if, in case of 8 seconds, moderate crispness corresponds to 3 minutes of baking, then the rest baking time is adjusted to 3 minutes; meanwhile, supposing the temperature drop rate of the baking plate is calculated only two times in FIG. 7, according to the control flow in FIG. 7, the total baking time is 4 minutes, but the 5 minutes in FIG. 6. Of course, the number of times and frequency for calculating the temperature drop rate of the baking plate may be set in the program.

An important difference between the present invention and existing technologies lies in that in existing technologies the baking time is set in advance and is fixed, for example, if the baking time is set to 10 minutes, the waffles are baked for 10 minutes; however, in the present invention, what set in advance is the required crispness, the actual baking time is automatically adjusted according to the required crispness and the temperature drop rate of the baking plate, so that waffles of different batches and different ingredients all have the same crispness.

The above merely describes specific embodiments of the present invention, but the protecting scope of the present invention is defined in the claims appended hereto. Those skilled in the art should understand that the present invention includes, but is not limited to, the drawings and the contents described in the above specific embodiments.

## Claims

1. A control system of a waffle maker capable of displaying waffle crispness, comprising: a heating module for heating a baking plate; a temperature detection module for detecting the temperature of the baking plate; **characterized in that** the control system furthermore comprises an operation and display module configured to controlling an operation panel (8) to set and display waffle crispness; and a control module configured to for adjusting baking time according to the set waffle crispness and a temperature drop rate of the baking plate, the control module being connected with the heating module, the temperature detection module and the operation and display module respectively.

2. The control system of a waffle maker capable of displaying waffle crispness according to claim 1, **characterized in that** the control module is adapted to calculate the temperature drop rate of the baking plate multiple times so as to adjust the rest baking time multiple times.

3. The control system of a waffle maker capable of displaying waffle crispness according to claim 1, **characterized in that** the control module is adapted to calculate the temperature drop rate of the baking plate from a first set temperature to a second set temperature, the first set temperature being one value selected from a range of 160 degrees centigrade to 180 degrees centigrade and the second set temperature being one value from selected from a range of 120 degrees centigrade to 140 degrees centigrade.

4. The control system of a waffle maker capable of displaying waffle crispness according to claim 1, **characterized in that** the operation and display module comprises a crispness button unit and a crispness indicator light unit.

5. The control system of a waffle maker capable of displaying waffle crispness according to claim 1, **characterized in that** the control system further comprises a preheating module for controlling a preheating indicator light and/or a preheating buzzer, the preheating module being connected with the control module.

6. A waffle maker capable of displaying waffle crispness, comprising an upper lid (1) assembly and a lower lid (2) assembly that can be opened and closed with respect to each other, the upper lid (1) assembly comprising an upper baking plate (3) and an upper lid (1), the lower lid (2) assembly comprising a lower baking plate (4) and a lower lid (2), both the upper lid (1) assembly and the lower lid (2) assembly being provided with a heating element, **characterized in that** the waffle maker further comprises a control system according to claim 1.

7. The waffle maker capable of displaying waffle crispness according to claim 6 **characterized in that** the operation panel (8) comprises a crispness button for setting waffle crispness and a crispness indicator light for indicating waffle crispness.

8. The waffle maker capable of displaying waffle crispness according to claim 7, **characterized in that** one crispness button is provided, a plurality of crispness indicator lights are provided, wherein a crispness indicator mark (95) is arranged at the crispness indicator light.

9. The waffle maker capable of displaying waffle crispness according to claim 6, **characterized in that** the temperature detection element is a thermistor temperature sensor (5), wherein the thermistor temperature sensor (5) contacts the lower baking plate (4).

10. The waffle maker capable of displaying waffle crispness according to claim 6, **characterized in that** the waffle maker further comprises a buzzer and/or a preheating indicator light for indicating completion of preheating.

## Patentansprüche

1. Steuersystem eines Waffelbereiters mit der Fähigkeit, die Waffelknusprigkeit anzuzeigen, umfassend: ein Heizmodul zum Erwärmen einer Backplatte; ein Temperaturerfassungsmodul zum Erfassen der Temperatur der Backplatte; **dadurch gekennzeichnet, dass** das Steuersystem ferner ein Bedienungs- und Anzeigemodul, das dazu konfiguriert ist, ein Bedienfeld (8) zum Einstellen und Anzeigen der Waffelknusprigkeit zu steuern; und ein Steuermodul umfasst, das dazu konfiguriert ist, die Backdauer entsprechend der eingestellten Waffelknusprigkeit und einer Temperaturabfallrate der Backplatte anzupassen, wobei das Steuermodul jeweils mit dem Heizmodul, dem Temperaturerfassungsmodu und dem Bedienungs- und Anzeigemodul verbunden ist.

2. Steuersystem eines Waffelbereiters mit der Fähigkeit, die Waffelknusprigkeit anzuzeigen, nach Anspruch 1, **dadurch gekennzeichnet, dass** das Steuermodul dazu ausgebildet ist, die Temperaturabfallrate der Backplatte mehrmals zu berechnen, um die verbleibende Backdauer mehrmals anzupassen.

3. Steuersystem eines Waffelbereiters mit der Fähigkeit, die Waffelknusprigkeit anzuzeigen nach Anspruch 1, **dadurch gekennzeichnet, dass** das Steuermodul dazu ausgebildet ist, die Temperaturabfallrate der Backplatte von einer ersten Einstelltemperatur bis zu einer zweiten Einstelltemperatur zu berechnen, wobei die erste Einstelltemperatur ein Wert ist, der aus einem Bereich von 160 Grad Celsius bis 180 Grad Celsius ausgewählt ist und die zweite Einstelltemperatur ein Wert ist, der aus einem Bereich von 120 Grad Celsius bis 140 Grad Celsius ausgewählt ist.

4. Steuersystem eines Waffelbereiters mit der Fähigkeit, die Waffelknusprigkeit anzuzeigen nach Anspruch 1, **dadurch gekennzeichnet, dass** das Bedienungs- und Anzeigemodul eine Knusprigkeitstasteneinheit und eine Knusprigkeitsanzeigelichteinheit umfasst.

5. Steuersystem eines Waffelbereiters mit der Fähigkeit, die Waffelknusprigkeit anzuzeigen nach Anspruch 1, **dadurch gekennzeichnet, dass** das Steuersystem ferner ein Vorheizmodul zum Steuern einer Vorheizanzeigeleuchte und/oder eines Vorheizsummers umfasst, wobei das Vorheizmodul mit dem Steuermodul verbunden ist.

6. Waffelbereiter mit der Fähigkeit, die Waffelknusprigkeit anzuzeigen, umfassend eine Baugruppe mit oberem Deckel (1) und eine Baugruppe mit unterem Deckel (2), die in Bezug aufeinander geöffnet und geschlossen werden können, wobei die Baugruppe mit oberem Deckel (1) eine obere Backplatte (3) und einen oberen Deckel (1) umfasst, die Baugruppe mit unterem Deckel (2) eine untere Backplatte (4) und einen unteren Deckel (2) umfasst, wobei die Baugruppe mit oberem Deckel (1) and the Baugruppe mit unterem Deckel (2) mit einem Heizelement versehen sind, **dadurch gekennzeichnet, dass** der Waffelbereiter ferner das Steuersystem nach Anspruch 1 umfasst.

7. Waffelbereiter mit der Fähigkeit, die Waffelknusprigkeit anzuzeigen, nach Anspruch 6, **dadurch gekennzeichnet, dass** das Bedienfeld (8) eine Knusprigkeitstaste zum Einstellen der Waffelknusprigkeit und eine Knusprigkeitsanzeigeleuchte zum Anzeigen der Waffelknusprigkeit umfasst.

8. Waffelbereiter mit der Fähigkeit, die Waffelknusprigkeit anzuzeigen, nach Anspruch 7, **dadurch gekennzeichnet, dass** eine Knusprigkeitstaste vorgesehen ist und mehrere Knusprigkeitsanzeigeleuchten vorgesehen sind, wobei eine Knusprigkeitsanzeigemarkierung (95) an der Knusprigkeitsanzeigeleuchte angeordnet ist.

9. Waffelbereiter mit der Fähigkeit, die Waffelknusprigkeit anzuzeigen, nach Anspruch 6, **dadurch gekennzeichnet, dass** das Temperaturerfassungselement ein Thermistortemperatursensor (5) ist, wobei der Thermistortemperatursensor (5) mit der unteren Backplatte (4) in Kontakt steht.

10. Waffelbereiter mit der Fähigkeit, die Waffelknusprigkeit anzuzeigen, nach Anspruch 6, **dadurch gekennzeichnet, dass** der Waffelbereiter ferner einen Summer und/oder eine Vorheizanzeigeleuchte zum Anzeigen eines Abschlusses eines Vorheizens umfasst.

## Revendications

1. Un système de gaufrier capable d'afficher la croustillance de la gaufre, comprenant: module de chauffe destiné à chauffer une plaque de cuisson ; un modèle de détection de température destiné à détecter la température de la plaque chauffante ; **caractérisé en ce que** le système de commande comprend en outre un module de contrôle et d'affichage configuré pour contrôler un panneau de commande (8) destiné à paramétrer et afficher la croustillance de la gaufre ; et un module de commande configuré pour ajuster le temps de cuisson en fonction de la croustillance de gaufre paramétrée et le taux de chute de température de la plaque de cuisson, le module de commande étant respectivement connecté au module de chauffe, au module de détection de température et au module de contrôle et d'affichage.

2. Un système de gaufrier capable d'afficher la croustillance de la gaufre, selon la revendication 1, **caractérisé en ce que** le module de commande est adapté au calcul du taux de chute de température de la plaque de cuisson de multiples fois afin d'ajuster le temps de cuisson restant de multiples fois.

3. Un système de gaufrier capable d'afficher la croustillance de la gaufre, selon la revendication 1, **caractérisé en ce que** le module de commande est adapté au calcul du taux de chute de température de la plaque de cuisson à partir d'une première valeur de température paramétrée vers une deuxième température paramétrée, la première température paramétrée étant une valeur sélectionnée parmi une plage allant de 160 degrés centigrade à 180 degrés centigrade et la deuxième température paramétrée étant une valeur sélectionnée parmi une plage allant de 120 degrés centigrade à 140 degrés centigrade.

4. Un système de gaufrier capable d'afficher la croustillance de la gaufre, selon la revendication 1, **caractérisé en ce que** le module de commande et d'affichage comprend une unité de bouton de croustillance et une unité de témoin lumineux de croustillance.

5. Un système de gaufrier capable d'afficher la croustillance de la gaufre, selon la revendication 1, **caractérisé en ce que** le système de commande comprend en outre un module de préchauffage contrôlant un témoin lumineux de préchauffage et/ou un avertisseur de préchauffage, le module de préchauffage étant connecté au module de commande.

6. Un système de gaufrier capable d'afficher la croustillance de la gaufre, comprenant un ensemble de couvercle supérieur (1) et un ensemble de couvercle inférieur (2) pouvant être ouverts et fermés l'un par rapport à l'autre, l'ensemble de couvercle supérieur (1) comprenant une plaque de cuisson supérieure (3) et un couvercle supérieur (1), l'ensemble de couvercle inférieur (2) comprenant une plaque de cuisson inférieure (4) et un couvercle inférieur (2), l'ensemble de couvercle supérieur (1) et l'ensemble de couvercle inférieur (2) étant munis d'un élément de chauffe, **caractérisé en ce que** le gaufrier comprend en outre un système de commande selon la revendication 1.

7. Un système de gaufrier capable d'afficher la croustillance de la gaufre selon la revendication 6, **caractérisé en ce que** le panneau de commande (8) comprend un bouton de croustillance destiné à paramétrer la croustillance de gaufre et un témoin lumineux de croustillance indiquant la croustillance de gaufre.

8. Un système de gaufrier capable d'afficher la croustillance de la gaufre selon la revendication 7, **caractérisé en ce que** un bouton de croustillance est fourni, une pluralité de témoins lumineux de croustillance est fournie, dans lequel une marque indicatrice de croustillance (95) est agencée au témoin lumineux de croustillance.

9. Un système de gaufrier capable d'afficher la croustillance de la gaufre selon la revendication 6, **caractérisé en ce que** l'élément de détection de température est un capteur de température à thermistance (5), dans lequel le capteur de température à thermistance (5) est en contact avec la plaque de cuisson inférieure (4).

10. Un système de gaufrier capable d'afficher la croustillance de la gaufre selon la revendication 6, **caractérisé en ce que** le gaufrier comprend en outre un avertisseur et/ou un témoin lumineux de préchauffage indiquant la fin du préchauffage.
